# FASCICULE DE BREVET EUROPEEN

(11) **EP 1 444 104 B1**
(45) Date de publication et mention de la délivrance du brevet: **29.08.2007**
(21) Numéro de dépôt: 02782823.5
(22) Date de dépôt: 04.10.2002
(51) Int. Cl.: B60C 11/12, B29D 30/06, B60C 11/13

(54) **BANDE DE ROULEMENT COMPORTANT DES INCISIONS ET LAMELLE POUR MOULER CES INCISIONS**
REIFENLAUFFLÄCHE MIT EINSCHNITTEN UND ZUR FORMUNG DER EINSCHNITTE VERWENDETES MESSER
TYRE TREAD COMPRISING INCISIONS AND A BLADE USED TO MOULD SAID INCISIONS

(30) Priorité: 11.10.2001 FR 0113137
(43) Date de publication de la demande: 11.08.2004
(73) Titulaire: Société de Technologie Michelin, 63000 Clermont-Ferrand (FR); Michelin Recherche et Technique S.A., 1763 Granges-Paccot (CH)
(72) Inventeur: LAGNIER, Alain, F-63540 Romagnat (FR)
(74) Mandataire: Diernaz, Christian
(86) Numéro de dépôt international: PCT/EP2002/011112
(87) Numéro de publication internationale: WO 2003/033281

(56) Documents cités:
- EP-A- 0 564 435
- FR-A- 2 703 002
- US-A- 3 608 602
- PATENT ABSTRACTS OF JAPAN vol. 1996, no. 11, 29 novembre 1996 (1996-11-29) -& JP 08 175115 A (YOKOHAMA RUBBER CO LTD:THE), 9 juillet 1996 (1996-07-09) cité dans la demande
- PATENT ABSTRACTS OF JAPAN vol. 1998, no. 08, 30 juin 1998 (1998-06-30) & JP 10 080923 A (BRIDGESTONE CORP), 31 mars 1998 (1998-03-31)
- PATENT ABSTRACTS OF JAPAN vol. 2000, no. 25, 12 avril 2001 (2001-04-12) & JP 2001 219716 A (OHTSU TIRE & RUBBER CO LTD:THE), 14 août 2001 (2001-08-14)

## Description

L'invention concerne le domaine des sculptures de bande de roulement pour pneumatique. Elle concerne plus particulièrement les incisions moulées dans les bandes de ainsi que les éléments moulants employés pour mouler de telles incisions.

Dans le cadre de l'amélioration des performances de ses pneumatiques, la demanderesse a dépose plusieurs brevets dans lesquels il est décrit diverses géométries d'incisions qui tout en créant des arêtes supplémentaires indispensables pour couper le film d'eau recouvrant la chaussée permettent de limiter la perte de rigidité de la bande de roulement due à la présence de ces incisions. Par exemple, le brevet US4794965 décrit une disposition particulière d'incisions en zigzag dans l'épaisseur d'une bande de roulement, le brevet US5783002 décrit une incision dont les parois opposées sont pourvues de motifs de relief destinés à s'imbriquer les uns dans les autres dans le passage dans l'empreinte avec la chaussée. Ces diverses incisions assurent une coopération mécanique des parois de mélange caoutchouteux ce qui est très appréciable pour réduire les mouvements relatifs entre lesdites parois.

Le développement de véhicules faisant appel à de nouveaux systèmes d'aide à la conduite (système antiblocage de roues en condition de freinage, système antipatinage, système de contrôle de stabilité) font que les besoins en matière de performances des pneumatiques ont évolué.

Pour ces véhicules, le besoin s'est fait sentir de pneumatique ayant une bande de roulement pourvue d'une pluralité d'incisions pour former une pluralité d'arêtes destinées à entrer en contact avec la chaussée, ces incisions ayant une nouvelle géométrie qui, tout en limitant la diminution de rigidité globale de cette bande sous fortes sollicitations de cisaillement, présente la capacité de réduire le plus possible les mouvements relatifs entre les parois opposées dès lors qu'elles sont en contact au moins partiel l'une sur l'autre sous de faibles sollicitations de cisaillement (et tout particulièrement par temps de pluie ou de chaussée humide).

Dans l'état de la technique connu, il existe des documents qui font état de l'intérêt de réaliser sur les parois des incisions des rugosités ayant des dimensions particulières. Par exemple, le document japonais publié sous le numéro JP-A-8 175 115 préconise une rugosité comprise entre 20 et 300 microns.

Toutefois, il a été montré que ces seules rugosités étaient insuffisantes pour atteindre un bon compromis dans toutes les conditions d'usage de ces pneumatiques.

Le document EP-A-564435 décrit un pneumatique pourvu d'incisions comprenant des nervures pour empêcher leur fermeture.

Toutefois, il a été montré que ces seules rugosités étaient insuffisantes pour atteindre un bon compromis dans toutes les conditions d'usage de ces pneumatiques.

L'objet de l'invention est atteint par une bande de roulement selon la revendication 1.

Avantageusement, les lignes de la première série font avec les lignes de la deuxième série un angle aigu au moins égal à 45°.

De cette façon, il est possible d'obtenir une bande de roulement dont la rigidité globale est assez peu perturbée par la présence des incisions selon l'invention et qui comporte un grand nombre d'arêtes. L'incision selon l'invention permet, avec un même matériau caoutchoutique, d'augmenter sensiblement le coefficient de frottement équivalent des parois des parties de mélange caoutchouteux délimitant ladite incision. Cette augmentation du coefficient de frottement est particulièrement efficace pour réduire les petits déplacements relatifs d'une paroi par rapport à la paroi opposée et en particulier près de la surface de contact avec la chaussée. La présence combinée de lignes de relief (assimilables à une macro rugosité) et d'une rugosité de surface (assimilable à une micro rugosité) accroît de manière inattendue l'effet de blocage d'une paroi sur la paroi en vis-à-vis principalement dans le domaine des sollicitations faibles ou moyennes.

Un autre avantage obtenu est que le pneumatique pourvu d'incisions selon l'invention est moins sensible à la présence d'eau sur la chaussée, dont on sait l'influence prépondérante sur le coefficient de frottement entre deux parois lisses d'un même mélange de caoutchouc (diminution dudit coefficient pouvant aller jusqu'à 50% voire plus).

L'invention trouve des applications d'utilisation dans les bandes de roulement de pneumatiques de véhicules de tourisme ou de véhicules de poids lourd ; dans chaque cas respectif, les valeurs des macro rugosités et micro rugosités peuvent être aisément adaptées en fonction des largeurs moyennes des incisions pouvant aller jusqu'à 3 mm.

Préférentiellement, les lignes de motifs en relief de chaque série d'au moins une paroi sont sensiblement inclinées d'un angle β compris entre 10° et 80° avec une direction perpendiculaire à la surface de roulement de la bande, et cela sur au moins une partie de leur longueur.

Un autre objet de l'invention concerne une lamelle selon la revendication 7.

Par ligne de motifs en creux, on peut avoir une ligne continue ou une ligne formée de motifs discontinus. Préférentiellement, au moins une face principale de la lamelle selon l'invention est pourvue d'une première série et une deuxième série de lignes de motifs en creux, les lignes de chaque série s'étendant dans une même direction, et les lignes de la première série croisant les lignes de la deuxième série pour faire un angle aigu moyen α au moins égal à 45°.

D'autres caractéristiques et avantages de l'invention ressortent de la description faite ci-après en référence au dessin annexé qui montre, à titre d'exemple non limitatif, des formes de réalisation de l'invention.

Sur ce dessin :
La figure 1 montre une lamelle métallique employée pour mouler une incision selon l'invention ;
La figure 2 montre une vue en coupe selon la ligne II-II de la lamelle montrée à la figure 1 ;
La figure 3 montre une paroi de gomme d'une incision selon l'invention réalisée dans une bande de roulement.

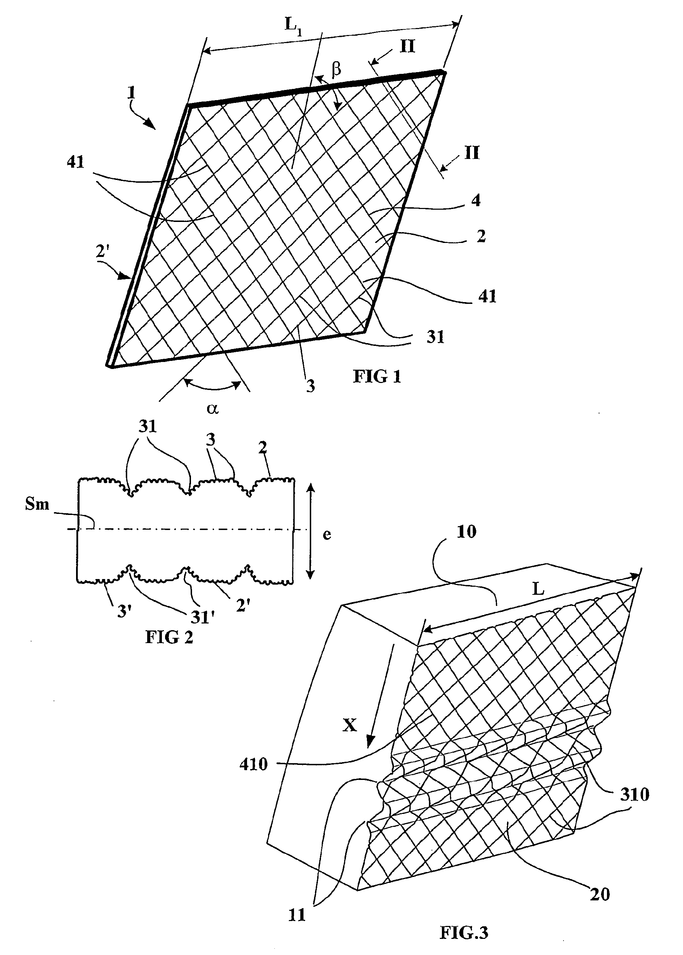

Sur la figure 1, on distingue une lamelle 1 de géométrie globale plane comportant deux faces principales 2, 2' destinées au moulage des parois en vis-à-vis délimitant une incision selon l'invention dans une bande de roulement. L'épaisseur de la lamelle mesurée entre les deux faces principales est égale dans le cas décrit à 0.6 mm. La surface moyenne de cette lamelle est ici une surface plane divisant la lamelle en deux parties de même volume et passant à mi épaisseur.
Sur la totalité de chaque face principale 2 et 2', on a réalisé un traitement de surface par grenaillage afin d'obtenir sur les parois de matériau caoutchoutique moulées avec la lamelle une micro rugosité uniforme comprise entre 1/10 et 1/100 de l'épaisseur de la lamelle. Ce traitement de surface réalise une pluralité de cavités 3 et 3' régulièrement réparties sur les faces principales de la lamelle, lesdites cavités ayant dans le cas présent une profondeur maximale comprise entre 40 et 50 µm. Ces cavités 3 et 3' sont visibles plus particulièrement sur la figure 2 montrant une vue en coupe selon la ligne II-II de la lamelle 1.

En outre, sur chaque face principale 2 et 2' de la lamelle 1, deux séries 3, 4 de rainures 31, 41 sensiblement rectilignes ont été formées. Les rainures 31 de la première série 3 ont une section transversale de forme triangulaire et ont une profondeur maximale égale à 0.1 mm et une largeur maximale égale à 0.5 mm ; ces rainures 31 sont, dans le cas présent, rectilignes et parallèles entre elles et distantes les unes des autres d'un pas moyen égal à 1 mm. Le pas moyen entre les rainures est préférentiellement au moins égal à 5 % de la longueur moyenne L₁ de l'incision et au plus égal à 20 % de cette même longueur L₁ (cette longueur L₁, dans le cas présent égale à 20 mm, étant mesurée parallèlement à une direction parallèle à la surface de roulement d'une bande de roulement moulée dans un moule pourvu de ladite lamelle).

Dans le cas décrit, les rainures 31 de la paroi 2 font un angle β égal à 25° avec une direction perpendiculaire à la surface de roulement de la bande (cette direction est perpendiculaire à la direction suivant laquelle est mesurée la longueur L₁).

Les rainures 41 de la deuxième série 4 sur la même face principale 2 présentent les mêmes caractéristiques que celles de la première série et croisent celles-ci en faisant un angle aigu moyen α égal à 45°.

Les séries de rainures réalisées sur l'autre face principale 2' de la lamelle présentent des caractéristiques analogues à celles qui viennent d'être décrites. Il est bien entendu possible de réaliser sur la deuxième face principale des rainures présentant des orientations différentes de celles réalisées sur la première face principale afin d'améliorer encore l'interaction entre les faces en vis-à-vis de l'incision moulée avec cette lamelle.

Les rainures formées sur les faces principales de la lamelle conduisent au moulage de nervures (en relief) sur les parois délimitant l'incision moulée avec ladite lamelle ; on considère ici que ces séries de nervures forment une macro rugosité.

Il a été observé que la combinaison d'une micro rugosité avec une macro rugosité (telles que définies dans le présent exposé), permet d'atteindre un meilleur équilibre en roulage que l'on soit dans le domaine des petites sollicitations ou dans celui des moyennes sollicitations.

Sur la figure 2 représentant une vue en coupe de la lamelle 1 suivant la ligne II-II, sont visibles les profils en coupe des rainures 31 et 31' : ceux-ci ont une forme sensiblement triangulaires. D'autre part, la micro rugosité formée par la pluralité de cavités 3 et 3' est visible sur les faces principales 2 et 2' y compris sur lesdites rainures.

En outre, on peut prévoir que les incisions ont des surfaces moyennes dont les formes géométriques sont appropriées pour permettre une coopération mécanique par imbrication des parois opposées délimitant lesdites incisions. Cette coopération mécanique offre l'avantage de prendre le relais des blocages obtenus avec les micro et macro rugosité selon l'invention dès lors que les sollicitations augmentent sensiblement.

La figure 3 montre une paroi 20 d'une incision selon l'invention, cette incision étant moulée dans un bloc de sculpture 10 d'une bande de roulement en caoutchouc. Cette paroi 20 de largeur L comprend des ondulations 11 autour d'une direction X perpendiculaire à ladite largeur L (cette direction X s'étend dans l'épaisseur du bloc de sculpture 10), lesdites ondulations s'étendant sur toute cette longueur L. Ces ondulations sont formées sur les parois en vis-à-vis délimitant l'incision et permettent un engrènement mécanique d'une paroi sur l'autre dans le passage dans le contact avec la chaussée. En outre, la paroi 20 comprend une combinaison de micro rugosités et de macro rugosités (ces dernières ayant la forme de nervures étant représentées de manière schématique par les lignes 310 et 410).

Dans le cas décrit avec la figure 3 les micro rugosités sont identiques à celles obtenues par moulage avec la lamelle décrite avec le support de la figure 1.

La combinaison de l'engrènement mécanique par la présence d'ondulations, des micro rugosités et des macro rugosités telles que définies ici confère au pneumatique pourvu d'une bande de roulement selon l'invention des performances encore améliorées et en particulier lors de la mise en oeuvre de système antiblocage ou antipatinage de roues.

L'invention n'est pas limitée aux exemples décrits et représentés et diverses modifications peuvent y être apportées sans sortir de son cadre. Par exemple, les séries de reliefs moulés sur les parois délimitant une incision peuvent avoir, vus en projection sur une surface plane tangente à l'une des parois, des tracés non rectilignes notamment des formes circulaires concentriques ou non, des formes en zigzag, des formes ondulées, etc.

De manière équivalente, les lignes de reliefs peuvent être formées de tronçons de lignes formant des sortes de lignes discontinues, l'espace séparant chaque tronçon étant inférieur à la longueur moyenne desdits tronçons.

## Revendications

1. - Bande de roulement en matériau élastomérique pour pneumatique, cette bande étant pourvue d'une pluralité d'incisions, chaque incision de largeur moyenne e et de surface moyenne Sm étant délimitée par des parois (20) en vis-à-vis, au moins une des parois délimitant chaque incision comporte sur toute sa surface, une rugosité moyenne comprise entre 1/100 et 1/10 de la largeur e de l'incision,**caractérisée en ce qu'**au moins une des parois (20) délimitant chaque incision comporte au moins une première série et une deuxième série de lignes de motifs en relief (310, 410) par rapport à ladite paroi et ayant une hauteur maximale mesurée perpendiculairement à ladite paroi au moins égale à 1/10 de la largeur e, chaque série de lignes comportant une pluralité de lignes s'étendant dans une même direction chaque ligne de chaque série parcourant la surface d'un bord à un autre bord de cette surface, les lignes de la première série croisant les lignes de la deuxième série.

2. - Bande de roulement selon la revendication 1 **caractérisée en ce que** les lignes (310) de la première série font avec les lignes (410) de la deuxième série un angle aigu moyen α au moins égal à 45°.

3. - Bande de roulement selon l'une des revendications 1 ou 2 **caractérisée en ce que** la surface moyenne Sm d'au moins une incision a une géométrie non plane et appropriée afin que les parois délimitant ladite incision soient aptes à coopérer de façon mécanique l'une avec l'autre lors du passage dans le contact avec la chaussée, afin de réduire les mouvements relatifs d'une paroi par rapport à l'autre.

4. - Bande de roulement selon la revendication 3 **caractérisée en ce que** la surface moyenne Sm comporte au moins une ondulation (11) dans la direction perpendiculaire à cette surface moyenne.

5. - Bande de roulement selon l'une des revendications 1 à 4 **caractérisée en ce que** les lignes de relief (310, 410) d'au moins une paroi (20) sont inclinées d'un angle β compris entre 10° et 80° avec une direction perpendiculaire à la surface de roulement de la bande.

6. - Bande de roulement selon l'une des revendications 1 à 5 **caractérisée en ce que** le pas moyen entre les lignes (310, 410) de chaque série de lignes de relief est au moins égal à 5 % de la longueur L de l'incision et au plus égal à 20 % de cette même longueur L.

7. - Lamelle (1) destinée à équiper un moule de bande de roulement en matériau élastomérique, cette lamelle comportant des faces principales (2, 2') pour mouler dans une bande des parois en vis-à-vis délimitant une incision d'épaisseur moyenne e, au moins une des faces principales de la lamelle comportant sur toute sa surface une rugosité moyenne équivalente comprise entre 1/100 et 1/10 de la largeur e de l'incision,**caractérisée en ce que** chaque paroi principale (2, 2') de la lamelle est pourvue d'une première (3) et d'une deuxième (4) pluralité de lignes de motifs en creux régulièrement répartis sur ladite paroi, les motifs en creux (31, 41, 31', 41') ayant une profondeur maximale mesurée perpendiculairement à ladite paroi au moins égale à 1/10 de la largeur e, chaque série de lignes (3, 4) comportant une pluralité de ligne sensiblement parallèles entre elles, chaque ligne de chaque série parcourant la surface d' un bord à un autre de cette surface, les lignes de motifs (31, 31') de la première série coupant les lignes (41, 41') de la deuxième série en faisant un angle aigu au moins égal à 45°.

8. - Lamelle (1) destinée à équiper un moule de bande de roulement selon la revendication 7 **caractérisée en ce qu'**en outre des motifs de relief (11) sont formés sur chaque paroi principale de ladite lamelle, les motifs de relief (11) d'une paroi étant complémentaires des motifs de relief de l'autre paroi afin de permettre une coopération mécanique des parois délimitant l'incision moulée avec ladite lamelle, cette coopération mécanique limitant les mouvements relatifs des parois en vis-à-vis.

## Claims

1. A tread made of elastomeric material for tyres, this tread being provided with a plurality of incisions, each incision of average width e and of average surface Sm being defined by facing walls (20), at least one of the walls defining each incision comprises over its entire surface an average roughness of between 1/100 and 1/10 of the width e of the incision, **characterised in that** at least one of the walls (20) defining each incision comprises at least a first series and a second series of lines of motifs in relief (310, 410) relative to said wall and having a maximum height measured perpendicular to said wall at least equal to 1/10 of the width e, each series of lines comprising a plurality of lines extending in the same direction, each line of each series traversing the surface from one edge to an other edge of this surface, the lines of the first series intersecting the lines of the second series.

2. A tread according to Claim 1, **characterised in that** the lines (310) of the first series form with the lines (410) of the second series an average acute angle α at least equal to 45°.

3. A tread according to one of Claims 1 or 2, **characterised in that** the average surface Sm of at least one incision has a non-planar geometry appropriate so that the walls defining said incision are capable of cooperating mechanically with each other when passing into contact with the roadway, in order to reduce the movements of one wall relative to the other.

4. A tread according to Claim 3, **characterised in that** the average surface Sm comprises at least one undulation (11) in the direction perpendicular to this average surface.

5. A tread according to one of Claims 1 to 4, **characterised in that** the lines in relief (310, 410) of at least one wall (20) are inclined by an angle β of between 10° and 80° with a direction perpendicular to the running surface of the tread.

6. A tread according to one of Claims 1 to 5, **characterised in that** the average pitch between the lines (310, 410) of each series of lines in relief is at least equal to 5% of the length L of the incision and at most equal to 20% of this same length L.

7. A lamella (1) intended for fitting in a tread mould of elastomeric material, this lamella comprising main faces (2, 2') for moulding in a tread facing walls defining an incision of average thickness e, at least one of the main faces of the lamella comprising over its entire surface an equivalent average roughness of between 1/100 and 1/10 of the width e of the incision, **characterised in that** each main wall (2, 2') of the lamella is provided with a first (3) and a second (4) plurality of lines of hollowed motifs regularly distributed over said wall, the hollowed motifs (31, 41, 31', 41') having a maximal depth measured perpendicular to said wall at least equal to 1/10 of the width e, each series of lines (3, 4) comprising a plurality of lines substantially parallel to each other, each line of each series traversing the surface from one edge to an other edge of this surface, the lines of motifs (31, 31') of the first series intersecting the lines (41, 41') of the second series, forming an acute angle at least equal to 45°.

8. A lamella (1) intended for fitting in a tread mould according to Claim 8 or Claim 7, **characterised in that** furthermore motifs in relief (11) are formed on each main wall of said lamella, the motifs in relief (11) of one wall being complementary with the motifs in relief of the other wall in order to permit mechanical cooperation of the walls defining the incision moulded with said lamella, this mechanical cooperation limiting the relative movements of the facing walls.

## Patentansprüche

1. Reifenlauffläche aus elastomerem Material für Reifen, wobei diese Reifenlauffläche mit mehreren Einschnitten versehen ist, wobei jeder Einschnitt von mittlerer Breite e und mittlerer Fläche Sm von gegenüberliegenden Wänden (20) begrenzt ist, wobei wenigstens eine der jeden Einschnitt begrenzenden Wände an ihrer gesamten Fläche eine mittlere Rauhigkeit aufweist, die zwischen 1/100 und 1/10 der Breite e des Einschnitts liegt, **dadurch gekennzeichnet, dass** wenigstens eine der jeden Einschnitt begrenzenden Wände (20) wenigstens eine erste Serie und eine zweite Serie von in Bezug auf die Wand erhabenen Musterlinien (310, 410) aufweist, die eine senkrecht zur Wand gemessenen maximale Höhe von wenigstens gleich 1/10 der Breite e besitzt, wobei jede Serie der Linien mehrere Linien umfasst, die sich in einer selben Richtung erstreckt, wobei jede Linie von jeder Serie die Fläche von einem Rand zum anderen Rand dieser Fläche durchläuft, wobei die Linien der ersten Serie die Linien der zweiten Serie kreuzen.

2. Reifenlauffläche gemäß Anspruch 1, **dadurch gekennzeichnet, dass** die.Linien (310) der ersten Serie mit den Linien (410) der zweiten Serie einen mittleren spitzen Winkel von wenigstens gleich 45° einschließen.

3. Reifenlauffläche nach einem der Ansprüche 1 oder 2, **dadurch gekennzeichnet, dass** die mittlere Fläche Sm von wenigstens einem Einschnitt eine nicht ebene Geometrie besitzt, die zweckmäßig ist, dass die den Einschnitt begrenzenden Wände geeignet sind, auf mechanische Weise im Verlauf beim Kontakt mit der Fahrbahn miteinander zusammenzuwirken, um die relativen Bewegungen einer Wand in Bezug auf die andere zu reduzieren.

4. Reifenlauffläche nach Anspruch 3, **dadurch gekennzeichnet, dass** die mittlere Fläche Sm wenigstens eine Wellenlinie (11) in der senkrecht zu dieser mittleren Fläche verlaufenden Richtung umfasst.

5. Reifenlauffläche nach einem der Ansprüche 1 bis 4, **dadurch gekennzeichnet, dass** die Relieflinien (310, 410) von wenigstens einer Wand (20) um einen Winkel β zu einer senkrecht zur Fläche der Reifenlauffläche verlaufenden Richtung geneigt sind, der zwischen 10° und 80° liegt.

6. Reifenlauffläche nach einem der Ansprüche 1 bis 5, **dadurch gekennzeichnet, dass** die mittlere Teilung zwischen den Linien (310, 410) von jeder Serie von Relieflinien wenigstens gleich 5% der Länge L des Einschnittes und höchstens gleich 20% dieser gleichen Länge L ist.

7. Lamelle (1), die dafür vorgesehen ist, eine Form für Reifenlauffläche aus elastomerem Material auszurüsten, wobei diese Lamelle Hauptflächen (2, 2') umfasst, um in eine Reifenlauffläche einen Einschnitt von mittlerer Dicke e begrenzende, gegenüberliegende Wände abzuformen, wobei wenigstens eine der Hauptflächen der Lamelle über ihre gesamte Fläche eine mittlere effektive Rauhigkeit aufweist, die zwischen 1/100 und 1/10 der Breite e des Einschnittes liegt, **dadurch gekennzeichnet, dass** jede Hauptfläche (2, 2') der Lamelle mit einer ersten (3) und einer zweiten (4) Anzahl von vertieften Musterlinien versehen ist, die gleichmäßig über die Wand verteilt sind, wobei die vertieften Muster (31, 41, 31', 41') eine senkrecht zu der Wand gemessenen maximale Tiefe von wenigstens gleich 1/10 der Breite e besitzt, wobei jede Linienserie (3, 4) eine Anzahl von im Wesentlichen untereinander paralleler Linien umfasst, wobei jede Linie von jeder Serie die Fläche von einem Rand zum anderen Rand dieser Fläche durchläuft, wobei die Muster-Linien (31, 31') der ersten Serie die Linien (41, 41') der zweiten Serie schneiden, indem sie einen spitzen Winkel von wenigstens gleich 45° einschließen.

8. Lamelle (1), die dafür vorgesehen ist, eine Form für Reifenlauffläche auszurüsten, nach Anspruch 7, **dadurch gekennzeichnet, dass** außerdem die Reliefmuster (11) auf jeder Hauptfläche der Lamelle gebildet sind, wobei die Reliefmuster (11) einer Wand komplementär zu den Reliefmustern der anderen Wand sind, um ein mechanisches Zusammenwirken der den mit dieser Lamelle geformten Einschnitt begrenzenden Wände zu ermöglichen, wobei dieses mechanische Zusammenwirken die relativen Bewegungen der gegenüberliegenden Wände begrenzt.
